# NEUE EUROPÄISCHE PATENTSCHRIFT

(11) **EP 1 474 308 B3**
(45) Veröffentlichungstag dieser Patentschrift: **19.08.2009**
(45) Hinweis auf die Patenterteilung: 06.07.2005
(21) Anmeldenummer: 03704442.7
(22) Anmeldetag: 21.01.2003
(51) Int. Cl.: B60N 2/12, B60N 2/08

(54) **LÄNGSEINSTELLER FÜR EINEN FAHRZEUGSITZ**
DEVICE FOR ADJUSTING A VEHICLE SEAT IN THE LONGITUDINAL DIRECTION
DISPOSITIF DE REGLAGE EN LONGUEUR D'UN SIEGE DE VEHICULE

(30) Priorität: 22.01.2002 DE 10202179
(43) Veröffentlichungstag der Anmeldung: 10.11.2004
(73) Patentinhaber: KEIPER GmbH & Co. KG, 67657 Kaiserslautern (DE)
(72) Erfinder: KLAHOLD, Wolfgang, 44652 Herne (DE); SCHÜLER, Rolf, 42579 Heiligenhaus (DE); BORBE, Michael, 53359 Rheinbach (DE); MITULLA, Gerhard, 44789 Bochum (DE); JÄHNER, Falko, 42653 Solingen (DE); SCHEIDLER, Jochen, 42853 Remscheid (DE); SCHEFFLER, Sascha, 45699 Herten (DE)
(74) Vertreter: Patentanwälte Hosenthien-Held und Dr. Held
(86) Internationale Anmeldenummer: PCT/EP2003/000536
(87) Internationale Veröffentlichungsnummer: WO 2003/062012

(56) Entgegenhaltungen:
- DE-A- 19 509 344
- US-A- 4 547 718
- US-A- 5 348 373
- US-A- 5 717 300

## Beschreibung

Die Erfindung betrifft einen Längseinsteller mit den Merkmalen des Oberbegriffs des Anspruches 1. Ein gattungsgemäßer Längseinsteller ist aus der DE 195 09 344 A1 bekannt.

Aus der DE 4201 829 A1 ist ein weiterer Längseinsteller bekannt, bei dem ein Schlepphebel während der normalen Längseinstellung des Fahrzeugsitzes mitgeführt wird. Beim Freischwenken der Lehne wird der Schlepphebel abgesenkt und greift in die feststehende Sitzschiene ein, so daß der Fahrzeugsitz von dieser gespeicherten Längsposition aus nach vorne verschoben werden kann. Bei der Rückkehr zu der gespeicherten Längsposition wird beim Auflaufen auf den Schlepphebel die Verriegelung des Längseinstellers ausgelöst, so daß der Fahrzeugsitz wieder in dieser Längsposition verriegelt wird.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, daß ein mit der zweiten Sitzschiene in Wirkverbindung bringbarer Wegmesser und ein relativ zu dem Wegmesser beweglicher Steuersignalgeber vorgesehen sind, dessen Relativbewegung zum Wegmesser aus einer Ausgangsposition heraus die vorgenommene Längsverschiebung wiedergibt, wobei der Steuersignalgeber spätestens bei Erreichen der gespeicherten Sitzlängsposition, d.h. bei Erreichen dieser Position oder beispielsweise kurz davor, ein Steuermoment erfährt und dann wenigstens ein mit der zweiten Sitzschiene zusammenwirkendes Sperrelement ansteuert, so daß die weitere Längsverschiebung gesperrt wird, sind die Wegerfassung und die Sperrwirkung voneinander entkoppelt. Die für die Sperrwirkung zwischen den Sitzschienen notwendigen Kräfte, d.h. die für das Abstoppen der Bewegung der ersten Sitzschiene notwendigen Kräfte, werden - im Gegensatz zum Stand der Technik - nicht durch die Mittel zur Wegerfassung in einem Meßbereich aufgenommen, sondern durch ein gesondertes, angesteuertes Sperrelement in einem Lastbereich, so daß für den Steuer- und Meßbereich kostengünstig herzustellende Bauteile aus Kunststoff verwendet werden können, während für den Lastbereich Bauteile aus Metall zum Einsatz kommen. Der Steuerbereich muß nicht vollständig in den Meßbereich integriert sein, sondern kann etwas abgesondert sein, was die Vielfalt der Ansteuerungsmöglichkeiten erhöht.

Von den Sperrelementen im Lastbereich ist die eigentliche Verriegelung des Längseinstellers zu unterscheiden, welche durch eine gesonderte Verriegelungsvorrichtung erfolgt, die auf die Aufnahme von Crashkräften ausgelegt ist, beim direkten Auslösen des Längseinstellers entriegelt und in der neu eingestellten Sitzlängsposition den Längseinsteller wieder verriegelt. Diese Verriegelungsvorrichtung ist prinzipiell unabhängig von der Memoryvorrichtung, in der Regel aber mittelbar über die Auslösung des Längseinstellers gekoppelt. Beispielsweise kann eine Kopplungfüreinen ResetderMemoryvorrichtung bestehen.

Vorzugsweise ist als ein Sperrelement ein beispielsweise schwenkbarer, verschiebbarer oder anderweitig bewegbarer, gehäusefest gelagerter Positionierhebel vorgesehen, welcher bei Beaufschlagung durch den Steuersignalgeber aus der Memoryvorrichtung herausschwenkt, -schiebt oder -bewegt und direkt mit der zweiten Sitzschiene zusammenwirkt, beispielsweise über eine Sperrnase. Mehrere dieser Positionierhebel, deren Sperrnasen dann vorzugsweise unterschiedliche Abstände zur vorzugsweise gemeinsamen Schwenkachse aufweisen, haben den Vorteil, daß die effektive Teilung der zweiten Sitzschiene entsprechend der Anzahl der Positionierhebel in der Art des Noniusprinzips verringert wird, so daß einer der Positionierhebel sicher zum Tragen kommt, d.h. Die Bewegung des Fahrzeugsitzes stoppt.

Sofern nur eine kleine Anzahl von Positionierhebeln vorgesehen sein soll, kann bei gleichem Aufbau der Memoryvorrichtung ein unbeweglicher Platzhalter aus Kunststoff eingebaut sein. Die Positionierhebel sind vorzugsweise einzeln ansteuerbar und gemeinsam aushebbar, beispielsweise indem der Steuersignalgebersie in der einen Schwenkrichtung über einzelne Zungen und in der anderen Schwenkrichtung über einen gemeinsamen Bügel beaufschlagt.

In einer bevorzugten Ausführungsform läuft der als Spindelmutter ausgebildete Steuersignalgeber auf einer Spindel des Wegmessers, was eine exakte Speicherung des Weges erlaubt, welcher aus der gespeicherten Sitzlängsposition heraus zurückgelegt wird. Für die Definition der Ausgangsposition des Steuersignalgebers und zur Übertragung des Steuermoments weisen vorzugsweise der Steuersignalgeber einerseits und ein Block des Wegmessers andererseits jeweils eine Anschlagfläche auf, welche beim Anfahren der gespeicherten Sitzlängsposition in Anlage aneinander gelangen und dabei dann das Steuermoment übertragen. Die Erfassung des zurückgelegten Weges erfolgt vorzugsweise mittels eines drehbar gelagerten Laufrades, welches mit der zweiten Sitzschiene schaltbar zusammenwirkt und mit dem Wegmesser in Wirkverbindung steht. Da das Laufrad keine Sperrkräfte aufbringen muß, kann es reibschlüssig oder mit einer feinen Verzahnung mit der zweiten Sitzschiene zusammenwirken.

Das Laufrad ist vorzugsweise auf einem schwenkbaren Schalthebel oder einer mehrgliedrigen Hebelanordnung gelagert, welcher bzw. welche für eine Speicherung einer neu eingestellten Sitzlängsposition, also für einen Reset der Memoryvorrichtung, das Laufrad von der zweiten Sitzschiene trennt. Eine vorzugsweise vorgesehene Reset-Feder des Wegmessers bewegt dann den Steuersignalgeber in seine Ausgangsposition. Damit in demjenigen Schaltzustand, in dem das Laufrad auf der zweiten Sitzschiene aufsitzt, möglichst kein Spiel und damit kein Schlupf vorhanden ist, ist vorzugsweise eine Andrückfeder vorgesehen, welche beispielsweise durch Beaufschlagen des Schalthebels das Laufrad gegen die zweite Sitzschiene drückt.

Vorzugsweise ist die gesamte Memoryvorrichtung, abgesehen von herausragenden Sperrelementen und eventuellen Steuerelementen zum Zurücksetzen der Memoryvorrichtung, innerhalb eines durch die erste Sitzschiene definierten Bauraums angeordnet, also als eine Art Modul ausgebildet. Dies bietet gegenüber dem Stand der Technik mit außerhalb der Sitzschienen angeordneter Memoryvorrichtung eine große Bauraumersparnis.

Vorzugsweise ist eine Ansteuervorrichtung vorgesehen ist, welche beim direkten Auslösen des Längseinstellers die Memoryvorrichtung zurücksetzt, um das Speichern einer neuen Sitzlängsposition zu ermöglichen, wobei beim Freischwenken der Lehne die Memoryvorrichtung ohne Zurücksetzen entkoppelt ist, damit die eingestellte Sitzlängsposition gespeichert bleibt und wiederauffindbar ist. Die Ansteuervorrichtung kann oberhalb der Memoryvorrichtung auf der ersten Sitzschiene angebracht sein, also in unmittelbarer Nähe der Memoryvorrichtung, was das Zurücksetzen der Memoryvorrichtung vereinfacht. Dabei kann die Ansteuervorrichtung zugleich einen Bestandteil des Entriegelungssystems des Längseinstellers bilden, indem sie beispielsweise hierfür notwendige Bauteile lagert. Beim Freischwenken kann dann die Ansteuervorrichtung vorzugsweise die Verriegelungsvorrichtung entriegeln.

Die Erfindung wird vorzugsweise für Fahrzeugsitze von zweitürigen Kraftfahrzeugen eingesetzt, kann aber auch bei anderen Fahrzeugsitzen verwendet werden.

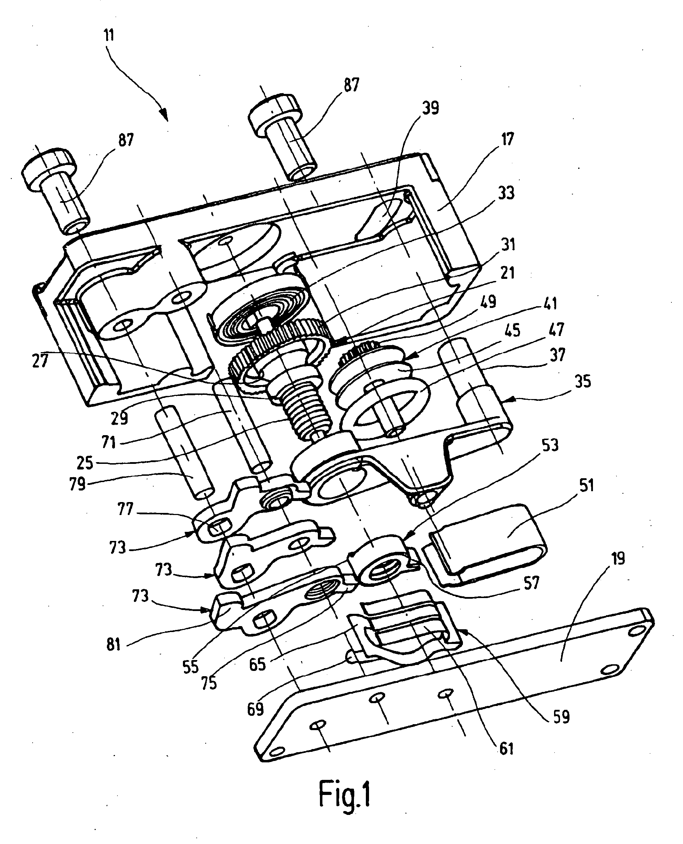

Im folgenden ist die Erfindung anhand eines in der Zeichnung dargestellten Ausführungsbeispiels näher erläutert. Es zeigen
- Fig. 1: eine Explosionsdarstellung einer Memoryvorrichtung des Ausführungsbeispiels,

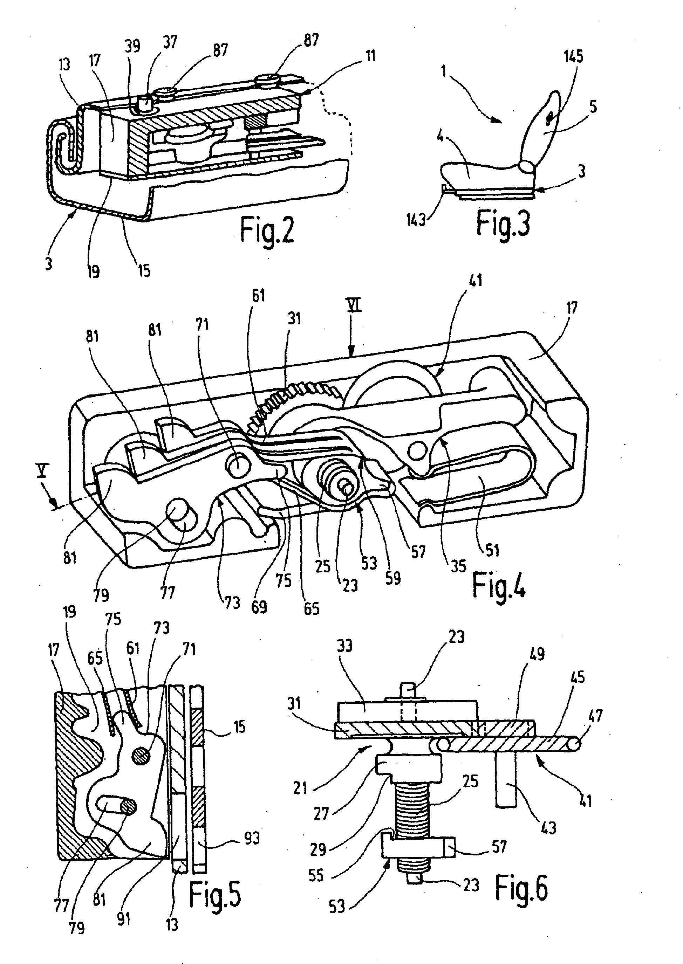

- Fig. 2: eine geschnitten dargestellte, perspektivische Teilansicht des Ausführungsbeispiels,
wobei die Fahrtrichtung nach links weist,
- Fig. 3: eine schematische Darstellung eines Fahrzeugsitzes,
- Fig. 4: eine perspektivische Unteransicht der Memoryvorrichtung ohne Deckel, wobei die Fahrtrichtung nach rechts weist,
- Fig. 5: einen Schnitt durch die Memoryvorrichtung im Bereich der Positionierhebel entlang der Linie V in Fig. 4,

- Fig. 6: eine teilweise geschnitten dargestellte Teilansicht der Memoryvorrichtung im Bereich des Wegmessers mit Blick in Richtung des Pfeiles VI in Fig. 4,
- Fig. 7: eine Explosionsdarstellung mit einer abgewandelten Memoryvorrichtung,

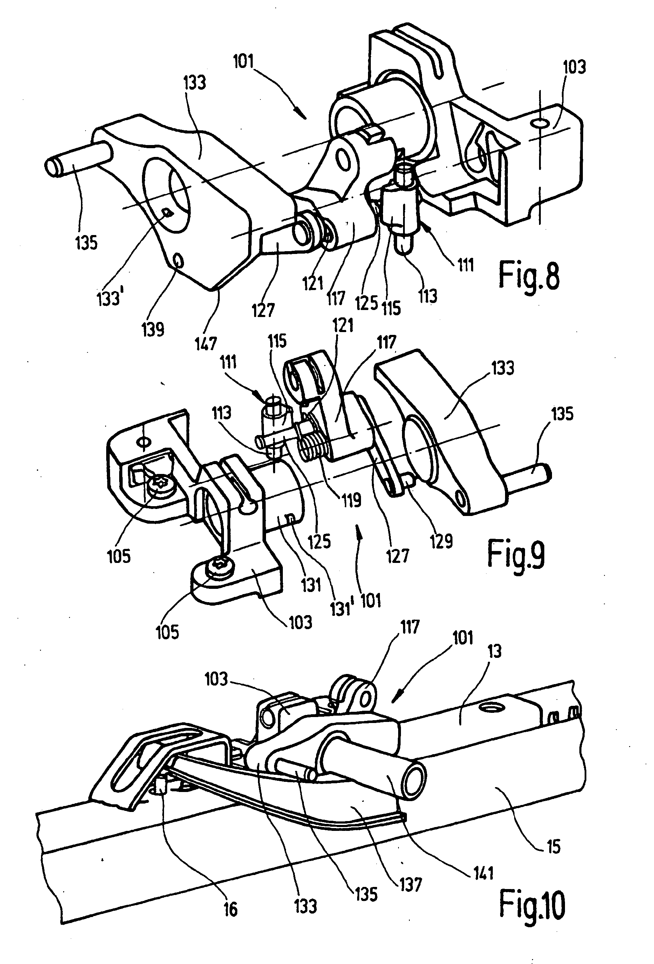

- Fig. 8: eine Explosionsdarstellung einer Ansteuervorrichtung des Ausführungsbeispiels,
- Fig. 9: eine weitere Explosionsdarstellung der Ansteuervorrichtung aus der entgegengesetzten Richtung, und
- Fig. 10: eine perspektivische Ansicht des Ausführungsbeispiels im Bereich der Verriegelungs-, Memory- und Ansteuervorrichtung.

Ein Fahrzeugsitz 1 für ein zweitüriges Kraftfahrzeug ist mittels eines Längseinstellers 3 als Ganzes längsverschiebbar, kann also verschiedene Sitzlängspositionen einnehmen. Die am Sitzteil 4 neigungseinstellbar angebrachte Lehne 5 des Fahrzeugsitzes 1 ist freischwenkbar, d.h. nach vorne klappbar, um den Zugang zu den Fondsitzen zu ermöglichen. Um einen möglichst breiten Zugang zu erhalten, wird beim Freischwenken der Lehne 5 zugleich der Längseinsteller 3 entriegelt, so daß der Fahrzeugsitz 1 nach vorne geschoben werden kann. Beim Zurückschwenken der Lehne 5 wird der Fahrzeugsitz 1 wieder zu der zuvor eingenommenen Sitzlängsposition verschoben, wo er verriegelt wird. Für die Speicherung dieser zuvor eingenommenen Sitzlängsposition ist eine Memoryvorrichtung 11 vorgesehen.

Die Memoryvorrichtung 11 ist innerhalb eines inneren Bauraumes einer Oberschiene 13 als einer von zwei ersten Sitzschienen des Längseinstellers 3 angeordnet, wobei die sitzstrukturfeste Oberschiene 13 in Längsrichtung des Fahrzeugsitzes 1 relativ zur fahrzeugstrukturfesten Unterschiene 15 als eine von zwei zweiten Sitzschienen des Längseinstellers 3 verschiebbar und mittels einer Verriegelungsvorrichtung 16 verriegelbar ist. Die Memoryvorrichtung 11 weist ein Gehäuse 17 auf, welches zumindest nach oben und nach vorne weitgehend geschlossene Wände aufweist und auf der Unterseite durch einen angeschraubten Deckel 19 verschlossen ist. Diejenige von zwei Längsseiten, die vollständig geöffnet ist, ist im folgenden als nach außen weisende Seite bezeichnet, während die gegenüberliegende, nur teilweise geöffnete Längsseite als nach innen weisende Seite bezeichnet ist.

Ein Wegmesser 21, welcher eine zentrale Achse aufweist, ist mittels Lagerzapfen 23, welche am oberen und am unteren Ende der zentralen Achse des Wegmessers 21 vorgesehen sind, in der oberen Wand des Gehäuses 17 bzw. im Deckel 19 drehbar gelagert. Der einstückig ausgebildete Wegmesser 21 weist entlang seiner zentralen Achse von unten her oberhalb des Lagerzapfens 23 eine Spindel 25 auf, an welche sich ein Lagerblock 27 anschließt, welcher mit einer ringförmigen Aussparung versehen ist. Der Lagerblock 27 weist im Bereich der nach unten, zur Spindel 25 gewandten Stirnseite eine erste Anschlagfläche 29 auf, welche radial außen und senkrecht zu dieser Stirnseite, d.h. in Längsrichtung der zentralen Achse verlaufend, angeordnet und in Umfangsrichtung als Absatz ausgebildet ist. Auf der nach oben weisenden Stirnseite des Lagerblocks 27 schließt sich ein großes Zahnrad 31 an, welches den Lagerblock 27 radial teilweise übergreift. Nach oben schließt sich an das große Zahnrad 31 der andere Lagerzapfen 23 des Wegmessers 21 an. Auf diesem Lagerzapfen 23 ist außerdem eine spiralförmig ausgebildete Reset-Feder 33 gelagert, deren inneres Ende am Lagerzapfen 23 und deren äußeres Ende am Gehäuse 17 fest abgestützt ist. Auf dem Lagerblock 27 ist ein Schalthebel 35 schwenkbar gelagert, welcher an seinem freien Ende einen parallel zur zentralen Achse des Wegmessers 21 angeordneten Steuerbolzen 37 trägt. Der nach oben abstehende Steuerbolzen 37 ragt durch eine Steuerkulisse 39 des Gehäuses 17 hindurch und steht uber die Oberseite des Gehäuses 17 über.

Ein Laufrad 41, dessen Achse parallel zur zentralen Achse des Wegmessers 21 und zum Steuerbolzen 37 angeordnet ist, ist mittels eines zweiten Lagerzapfens 43 im Schalthebel 35 drehbar gelagert. Das Laufrad 41 weist eine mit dem zweiten Lagerzapfen 43 fest verbundene Felge 45 auf, welche einen ringförmigen Reifen 47 aus Gummi oder Kunststoff aufnimmt. Auf der oberen Stirnseite der Felge 45 ist ein kleines Zahnrad 49 angebracht oder angeformt, welches mit dem großen Zahnrad 31 kämmt. Eine Andrückfeder 51, welche am Gehäuse 17 abgestützt ist, spannt den Schalthebel 35 zu der nach außen weisenden Seite des Gehäuses 17 vor, d.h. von oben her betrachtet im Uhrzeigersinn.

Auf die Spindel 25 ist ein als Spindelmutter ausgebildeter Steuersignalgeber 53 aufgeschraubt. Je nach gewünschter Ausrichtung der Memoryvorrichtung 11 in Bezug auf die Schienenlängsrichtung sind die Gewinde von Spindel 25 und Steuersignalgeber 53 Rechtsgewinde oder Linksgewinde. Der Steuersignalgeber 53 weist auf seiner nach oben, zum Lagerblock 27 hin weisenden Stirnseite eine zweite Anschlagfläche 55 auf, welche bezüglich ihrer Ausrichtung, d.h. vorliegend in Längsrichtung der zentralen Achse verlaufend, und ihrer Abmessungen auf ein Zusammenwirken mit der ersten Anschlagfläche 29 ausgebildet ist. Der Steuersignalgeber 53 weist eine radial abstehende Steuernase 57 auf, welche zur drehfesten Mitnahme einer Steuerfeder 59 ausgebildet ist. Die aus Federblech ausgestanzte Steuerfeder 59 umschließt den Steuersignalgeber 53 samt Steuernase 57 in Umfangsrichtung nahezu vollständig. Auf der nach außen weisenden Seite des Gehäuses 17 ist das Ende der Steuerfeder 59 in drei Steuerzungen 61 geteilt, während das zur nach innen weisenden Seite hin gewandte Ende einen bügelförmig geschlossenen Abschnitt, im folgenden als Steuerbügel 65 bezeichnet, und eine einzelne Abstützzunge 69 zur Abstützung am Gehäuse 17 aufweist.

Auf einem zur zentralen Achse des Wegmessers 21 parallelen und im Gehäuse 17 und Deckel 19 gelagerten Lagerbolzen 71 sind übereinander drei Positionierhebel 73 schwenkbar gelagert. Die drei Positionierhebel 73 weisen an ihrem nach vorne weisenden Ende jeweils einen Steuerfinger 75 auf, welcher auf der einen Seite an einer Steuerzunge 61 und auf der anderen Seite am Steuerbügel 65 anliegt. An dem gegenüberliegenden, nach hinten weisenden Ende weisen die Positionierhebel 73 jeweils eine um den Lagerbolzen 71 gekrümmte Führungskulisse 77 auf. Die Führungskulissen 77 nehmen einen gemeinsamen Führungsbolzen 79 auf, welcher parallel zum Lagerbolzen 71 angeordnet und am Gehäuse 17 befestigt ist. Jeder Positionierhebel 73 weist eine Sperrnase 81 auf, welche zu der geöffneten Seitenwand der Memoryvorrichtung 11 nach außen hin weist. Dabei sind die Sperrnasen 81 der einzelnen Positionierhebel mit unterschiedlichem radialen Abstand zum Lagerbolzen 71 angeordnet, wobei die Sperrnase 81 des obersten Positionierhebels 73 den geringsten radialen Abstand und die Sperrnase 81 des untersten Positionierhebels 73 den größten radialen Abstand aufweist. Die mittels der Abstützzunge 69 abgestützte Steuerfeder 59 spannt die Positionierhebel 73 nach innen vor, so daß die Sperrnasen 81 normalerweise im Inneren des Gehäuses 17 angeordnet sind.

Der Wegmesser 21, der Schalthebel 35 und die jeweils zugeordneten Bauteile bilden einen Steuer-und Meßbereich der Memoryvorrichtung 11, während die Positionierhebel 73 mit ihren Lagern einen Lastbereich bilden. Die gesamte Memoryvorrichtung 11 ist mittels Befestigungsschrauben 87 an der Oberschiene 13 an deren den inneren Bauraum nach oben begrenzenden Wand angeschraubt.

In der Sitzgebrauchsstellung des Fahrzeugsitzes 1 ist der Längseinsteller 3 verriegelt. Innerhalb der Memoryvorrichtung 11 befindet sich der Steuersignalgeber 53 am oberen Ende der Spindel 25 und liegt mit der zweiten Anschlagfläche 55 an der ersten Anschlagfläche 29 des Lagerblocks 27 des Wegmessers 21 an, jedoch ohne daß die Stirnseiten des Steuersignalgebers 53 und des Lagerblocks 27 einander berühren. Die Andrückfeder 51 drückt über den Schalthebel 35 das Laufrad 41 durch eine Öffnung der Oberschiene 13 hindurch in Anlage an die Unterschiene 15. Diese eingestellte Sitzlängsposition ist im folgenden als Memoposition bezeichnet.

Beim Freischwenken der Lehne 5 wird u.a. auch der Längseinsteller 3 entriegelt. Auf beiden Seiten des Fahrzeugsitzes 1 kann nun die Oberschiene 13 relativ zur Unterschiene 15 in Sitzlängsrichtung nach vorne verschoben werden. Aufgrund der Relatiwerschiebung zwischen Oberschiene 13 und Unterschiene 15 läuft das Laufrad 41 aufgrund von Reibung an der Unterschiene 15 entlang. Durch das kleine Zahnrad 49 wird das große Zahnrad 31 gedreht, so daß der Wegmesser 21 angetrieben wird. Der Steuersignalgeber 53 bewegt sich dabei entlang der Spindel 25 nach unten. Der zurückgelegte Weg des Fahrzeugsitzes 1 steht über die Übersetzung zwischen den beiden Zahnrädern 49 und 31 und der geometrischen Dimensionierung der Spindel 25 in direktem Zusammenhang mit dem Weg des Steuersignalgebers 53 entlang des Wegmessers 21. Entsprechend ist die Länge der Spindel 25 auf den maximalen Verfahrweg abgestimmt.

Beim Zurückschieben des Fahrzeugsitzes 1 bewegt sich der Steuersignalgeber 53 wieder auf den Lagerblock 27 zu Sobald die zweite Anschlagfläche 55 in Anlage an die erste Anschlagfläche 29 gelangt, entsteht ein Steuermoment, welches versucht, den Steuersignalgeber 53 weiter zu drehen, d.h. in der Zeichnung von oben betrachtet im Uhrzeigersinn. Über die Steuernase 57 des Steuersignalgebers 53 wird die Steuerfeder 59 beaufschlagt, welche mit ihren Steuerzungen 61 auf die Steuerfinger 75 der Positionierhebel 73 drückt. Die Positionierhebel 73 schwenken dadurch nach außen, wobei die Schwenkbewegung der Positionierhebel 73 durch die Relativbewegung der Führungskulisse 77 und des Führungsbolzens 79 beschränkt wird. Die Sperrnasen 81 treten durch Fenster 91 der Oberschiene 13 hindurch. Die Sperrnase 81 von wenigstens einem Positionierhebel 73 gelangt in eine Zahnlücke 93 der Unterschiene 15, so daß durch diese Sperre die Relativbewegung der Oberschiene 13 bezüglich der Unterschiene 15 gestoppt wird. Der Fahrzeugsitz 1 hat damit wieder seine Memoposition erreicht. Die Verriegelungsvorrichtung 16 verriegelt daraufhin wieder den Längseinsteller 3, so daß der Fahrzeugsitz 1 wieder für den Sitzgebrauch zur Verfügung steht. Die Steuerfeder 59 schwenkt mittels des Steuerbügels 65 die Positionierhebel 73 wieder in das Innere des Gehäuses 17 zurück.

Die Memoposition kann unter später beschriebenen Umständen, beispielsweise bei der normalen Längseinstellung des Fahrzeugsitzes 1 oder unabhängig davon, neu gesetzt werden, d.h. es kann ein Reset der Memoryvorrichtung 11 erfolgen. Hierzu wird der Steuerbolzen 37 entlang der Steuerkulisse 39 bewegt, so daß der Steuerbolzen 37 den Schalthebel 35 aus der Stellung, welche näher zu der nach außen weisenden Seite der Memoryvorrichtung 11 vorgesehen ist, in das Innere des Gehäuses 17 schwenkt. Das Laufrad 41 wird dadurch von der Unterschiene 15 abgehoben, wobei das kleine Zahnrad 49 in Eingriff mit dem großen Zahnrad 31 bleibt. Die Reset-Feder 33 treibt den Wegmesser 21 an, so daß der Steuersignalgeber 53, sofern er sich noch nicht am oberen Ende der Spindel 25 befindet, nach oben gedreht wird, bis die Anschlagflächen 29 und 55 in Anlage gelangen, nicht jedoch die Stirnseiten des Steuersignalgebers 53 und des Lagerblocks 27. Nach Freigabe des Steuerbolzens 37 setzt die Andrückfeder 51 das Laufrad 41 wieder auf die Unterschiene 15 auf und hält es spielfrei. Die neue Memoposition ist dadurch gespeichert.

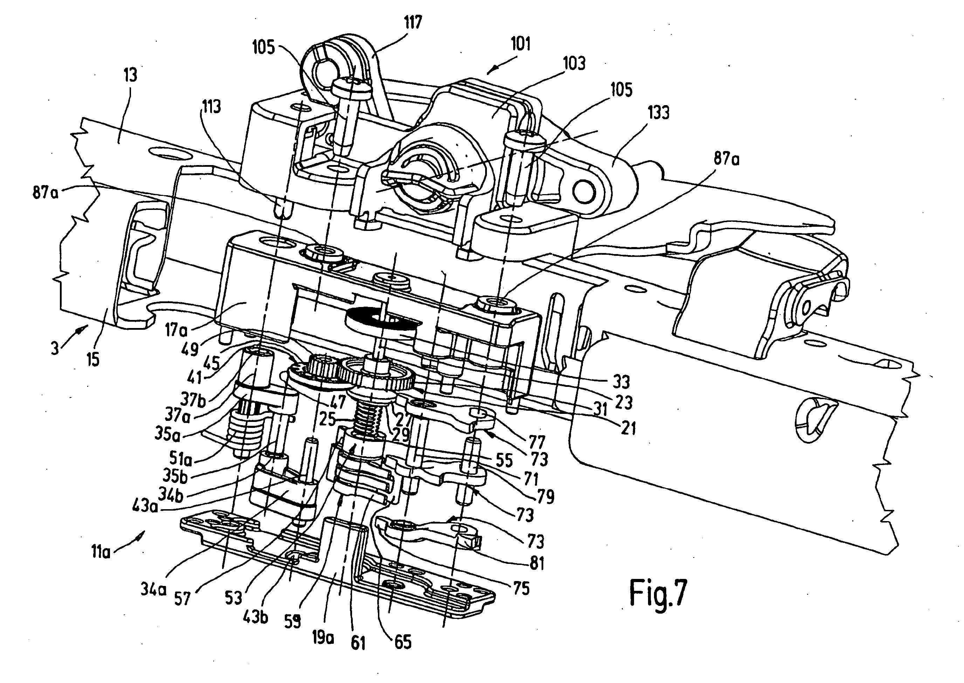

Fig. 7 zeigt eine Abwandlung der Memoryfunktion 11, bei der gleiche Bauteile mit gleichen Bezugszeichen und gleichwirkende Bauteile mit um Kleinbuchstaben ergänzten Bezugszeichen versehen sind. Die abgewandelte Memoryvorrichtung 11a stimmt im wesentlichen mit derjenigen Ausführungsbeispiel überein, soweit nachfolgend nicht anders beschrieben. Sie unterscheidet sich dadurch, daß der Steuerbereich stärker von dem Meßbereich, welcher durch den Wegmesser 21 und seine zugeordneten Bauteile gebildet wird, getrennt ist. Das Laufrad 41 ist hierzu mit seiner Felge 45 drehbar auf einer zur Spindel 25 parallelen Lagerachse 43a gelagert, welche an einem Ende im Deckel 19a in einer Lagerkulisse 43b und am anderen Ende im Gehäuse 17a in einer identisch gekrümmten Nut geführt ist. Auf der Lagerachse 43a sitzt zwischen dem Laufrad 41 und der Lagerkulisse 43b drehfest ein Laufradhebel 34a.

Im Steuerbereich ist ein zur Lagerachse 43a paralleler Steuerbolzen 37a drehbar im Gehäuse 17a und im Deckel 19a gelagert. Am Steuerbolzen 37a ist ein radial abstehender Schalthebel 35a angeformt, welcher parallel zum Steuerbolzen 37a einen Schaltzapfen 35b trägt, der wiederum drehbar in einer Schaltzapfenaufnahme 34b des Laufradhebels 34a gelagert ist. Eine um den Steuerbolzen 37a gewickelte Andrückfeder 51 a beaufschlagt den Schalthebel 35a so, daß über den Laufradhebel 34a das Laufrad 41 gegen die Unterschiene 15 gedrückt wird. Der Steuerbolzen 37a weist stirnseitig an dem im Gehäuse 17a gelagerten Ende eine profilierte Steueraufnahme 37b auf, welche von der Oberseite der Memoryvorrichtung 11a her zugänglich ist. Des weiteren sind auf der Oberseite der Memoryvorrichtung 11a zwei Zentnerdome 87a mit Sacklöchern vorgesehen. Im Lastbereich ist bei den Positionierhebeln 73 lediglich die Abfolge der Abstände der Sperrnasen 81 abweichend von derjenigen bei der Memoryvorrichtung 11, so daß der mittlere Positionierhebel 73 die Sperrnase 81 mit dem geringsten radialen Abstand zum Lagerbolzen 71 trägt.

Für einen Reset der Memoryvorrichtung 11 oder 11a bei der normalen Längseinstellung des Fahrzeugsitzes 1 ist oberhalb der Memoryvorrichtung 11 oder 11a auf der Oberschiene 13 eine Ansteuervorrichtung 101 angeordnet. Im folgenden wird deren Funktionsweise anhand der Memoryvorrichtung 11a erklärt. Die Ansteuervorrichtung 101 weist zur Lagerung mehrere beweglicher Bauteile einen Adapter 103 auf, dessen Montageschrauben 105 an den Zentrierdomen 87a in die Memoryvorrichtung 11a eingeschraubt sind, wodurch die Ansteuervorrichtung 101 und die Memoryvorrichtung 11a befestigt sind. Eine vertikal angeordnete Steuerwelle 111 ist von unten her in den Adapter 103 eingeführt und mit ihrem oberen Ende drehbar im Adapter 103 gelagert. Die Steuerwelle 111 trägt mit ihrer Drehachse fluchtend einen angeformten, profilierten Steuerzapfen 113, welcher drehfest in die Steueraufnahme 37b der Memoryvorrichtung 11a gesteckt ist. An der Steuerwelle 111 ist außerdem ein radial abstehender Evolventenzahn 115 angeformt. Im Falle der Memoryvorrichtung 11 wäre der Steuerzapfen 113 versetzt zur Drehachse der Steuerwelle 111 angeordnet.

Am Adapter 103 ist ferner in einer angeformten Lagerschale eine Schwinge 117 mit horizontaler Drehachse gelagert, welche durch eine Drehfeder 119 vorgespannt an einem als Anschlag dienenden Vorsprung des Adapters 103 anliegt. Die Schwinge 117 weist eine Kulisse 121 fur einen horizontal angeordneten Bolzen 125 auf, der innerhalb der Kulisse 121 beweglich und in der Ausgangsstellung in einem geringen Abstand zum Evolventenzahn 115 der Steuerwelle 111 angeordnet ist, wobei der gewählte Abstand für einen Toleranzausgleich angepaßt ist. Der Bolzen 125 ist an einer Schubstange 127 angebracht, von deren einen Ende er senkrecht absteht. Vom anderen Ende der Schubstange 127 steht in der vom Bolzen 125 entgegengesetzten Richtung ein fest mit der Schubstange 127 verbundener Schubstangen-Lagerzapfen 129 ab.

Am Adapter 103 ist eine seitlich abstehende Lagerhülse 131 angeformt, auf welcher ein doppelarmiges Druckstück 133 schwenkbar gelagert ist. Dabei ist ist an der Lagerfläche des Druckstücks 133 eine Sicherungsnase 133' angeformt, welche mit einer Sicherungsnut 131' auf der Außenseite der Lagerhülse 131 für eine axiale Sicherung des Druckstücks 133 zusammenwirkt. Ein Arm des Druckstücks 133 liegt auf der Schwinge 117 auf. Der andere Arm trägt auf der vom Adapter 103 abgewandten Seite einen horizontal abstehenden Zylinderstift 135, welcher auf einem nach hinten weisenden Entriegelungshebel 137 aufliegt. Im Bereich unterhalb der Lagerhülse 131 ist im Druckstück 133 ein Lagerauge 139 vorgesehen, in welches der Schubstangen-Lagerzapfen 129 greift.

Der Entriegelungshebel 137 ist an einem Ende drehfest an einem innerhalb der Lagerhülse 131 drehbar gelagerten Querrohr 141 angebracht. Mit dem anderen Ende kann der Entriegelungshebel 137 die innerhalb der Oberschiene 13 angeordnete Verriegelungsvorrichtung 16 entriegeln, von welcher in der Zeichnung nur ein aus der Oberschiene 13 nach oben herausragender Bolzen dargestellt ist. Am Querrohr 141 ist in der vom Entriegelungshebel 137 abgewandten Richtung ein Längseinsteller-Auslösebügel 143 drehfest angebracht, welcher unterhalb des vorderen Endes des Sitzteils 4 für den Insassen zugänglich ist. Ein seitlich an der Lehne 5 angebrachter Lehnenentriegelungshebel 145 steht über einen nicht dargestellten Bowdenzug in Wirkverbindung mit dem freien Ende der Schwinge 117.

Wird nun der Längseinsteller 3 durch Betätigen des Längseinsteller-Auslösebügels 143 ausgelöst (direkte Auslösung), so dreht sich das Querrohr 141 um seine Längsachse und schwenkt dabei den Entriegelungshebel 137 nach unten, welcher die Verriegelungsvornchtung 16 entgegen einer Federkraft entriegelt. Zugleich nimmt der Entriegelungshebel 137 durch Anlage an einen Steuerbuckel 147 des Druckstücks 133 das Druckstück 133 mit. Das Druckstück 133 verschiebt über den Schubstangen-Lagerzapfen 129 die Schubstange 127 in ihrer Längsrichtung, welche wiederum den Bolzen 125 innerhalb der Kulisse 121 verschiebt. Der Bolzen 125 ubt auf den Evolventenzahn 115 der Steuerwelle 111 ein Drehmoment aus, so daß die Steuerwelle 111 und damit der Steuerzapfen 113 sich drehen. Damit wird ein Reset der Memoryvorrichtung 11a eingeleitet.

Der Steuerzapfen 113 dreht den Steuerbolzen 37a, welcher den Schalthebel 35a schwenkt, der wiederum über den Laufradhebel 34a das Laufrad 41 in das Innere des Gehäuses 17a schwenkt und dadurch von der Unterschiene 15 abhebt. Die Reset-Feder 33 treibt den Wegmesser 21 an, so daß der Steuersignalgeber 53, sofern er sich noch nicht am oberen Ende der Spindel 25 befindet, nach oben gedreht wird, bis die Anschlagflächen 29 und 55 in Anlage gelangen, nicht jedoch die Stirnseiten des Steuersignalgebers 53 und des Lagerblocks 27. Wenn die neue Sitzlängsposition erreicht ist und der Längseinsteller 3 durch die Verriegelungsvorrichtung 16 wieder verriegelt ist, gibt die Ansteuervorrichtung 101 den Steuerbolzen 37a frei, so daß die Andrückfeder 51 a über die vorhandene Hebelanordnung das Laufrad 41 wieder auf die Unterschiene 15 aufsetzt und es spielfrei hält. Die neue Memoposition ist dadurch gespeichert.

Wird der Längseinsteller 3 beim Freischwenken durch Zug am Lehnenentriegelungshebel 145 ausgelöst (indirekte Auslösung), so wird die Schwinge 117 entgegen der Kraft der Drehfeder 119 nach oben (und hinten) geschwenkt. Der Bolzen 125 wird von der Steuerwelle 111 entfernt. Aufgrund der Richtungsänderung der Kulisse 121 kann auch keine Bewegung mehr auf die Steuerwelle 111 zu erfolgen. Damit ist die Memoryvorrichtung 11a entkoppelt, so daß kein Reset erfolgt. Die schwenkende Schwinge 117 drückt an dem vom Zylinderstift 135 abgewandten Ende des Druckstücks 133 von unten her auf das Druckstuck 133, welches um die Lagerhülse 131 schwenkt und mit dem Zylinderstift 135 auf den Entriegelungshebel 137 drückt. Der Entriegelungshebel 137 schwenkt nach unten und entriegelt dadurch die Verriegelungsvorrichtung 16. Der Fahrzeugsitz 1 kann nun nach vorne geschoben werden, wobei bei einer Ruckkehr, wie oben beschrieben, die Memoryvorrichtung 11a die Memoposition findet.

### Bezugszeichenliste

- 1: Fahrzeugsitz
- 3: Längseinsteller
- 4: Sitzteil
- 5: Lehne
- 11: Memoryvorrichtung
- 13: Oberschiene, erste Sitzschiene
- 15: Unterschiene, zweite Sitzschiene
- 16: Verriegelungsvorrichtung
- 17, 17a: Gehäuse
- 19, 19a: Deckel
- 21: Wegmesser
- 23: Lagerzapfen
- 25: Spindel
- 27: Lagerblock
- 29: erste Anschlagfläche
- 31: großes Zahnrad
- 33: Reset-Feder
- 34a: Laufradhebel
- 34b: Schaltzapfenaufnahme
- 35, 35a: Schalthebel
- 35b: Schaltzapfen
- 37,37a: Steuerbolzen
- 37b: Steueraufnahme
- 39: Steuerkulisse
- 41: Laufrad
- 43: zweiter Lagerzapfen
- 43a: Lagerachse
- 43b: Lagerkulisse
- 45: Felge
- 47: Reifen
- 49: kleines Zahnrad
- 51, 51a: Andrückfeder
- 53: Steuersignalgeber
- 55: zweite Anschlagfläche
- 57: Steuernase
- 59: Steuerfeder
- 61: Steuerzunge
- 65: Steuerbügel
- 69: Abstutzzunge
- 71: Lagerbolzen
- 73: Positionierhebel, Sperrelement
- 75: Steuerfinger
- 77: Führungskulisse
- 79: Führungsbolzen
- 81: Sperrnase
- 87: Befestigungsschraube
- 87a: Zentrierdom
- 91: Fenster
- 93: Zahnlücke
- 101: Ansteuervorrichtung
- 103: Adapter
- 105: Montageschraube
- 111: Steuerwelle
- 113: Steuerzapfen
- 115: Evolventenzahn
- 117: Schwinge
- 119: Drehfeder
- 121: Kulisse
- 125: Bolzen
- 127: Schubstange
- 129: Schubstangen-Lagerzapfen
- 131: Lagerhülse
- 131': Sicherungsnut
- 133: Druckstück
- 133': Sicherungsnase
- 135: Zylinderstift
- 137: Entriegelungshebel
- 139: Lagerauge
- 141: Querrohr
- 143: Längseinsteller-Auslösebügel
- 145: Lehnenentriegelungshebel
- 147: Steuerbuckel

## Patentansprüche

1. Längseinsteller für einen Fahrzeugsitz (1) mit frei schwenkbarer Lehne (5), mit einer ersten Sitzschiene (13), einer zweiten Sitzschiene (15), relativ zu welcher die erste Sitzschiene (13) in Längsrichtung verschiebbar ist, einer Verriegelungsvorrichtung (16) zum Verriegeln des Längseinstellers (3), welche auf die Aufnahme von Crashkräften ausgelegt ist und welche beim direkten Auslösen des Längseinstellers (3) entriegelt und in der neu eingestellten Sitzlängsposition den Längseinsteller (3) wieder verriegelt, und einer der ersten Sitzschiene (13) zugeordneten und mit der zweiten Sitzschiene (15) zusammenwirkenden Memoryvorrichtung (11; 11a), welche eine eingestellte Sitzlängsposition speichert, die durch eine beim Freischwenken der Lehne (5) vorgenommene Längsverschiebung des Fahrzeugsitzes (1) verlassen und beim Zurückschwenken der Lehne (5) wieder eingenommen wird, wobei ein mit der zweiten Sitzschiene (15) in Wirkverbindung bringbarer Wegmesser (21) und ein relativ zu dem Wegmesser (21) beweglicher Steuersignalgeber (53) vorgesehen sind, dessen Relativbewegung zum Wegmesser (21) aus einer Ausgangsposition heraus die vorgenommene Längsverschiebung wiedergibt, **dadurch gekennzeichnet, dass** der Steuersignalgeber (53) spätestens bei Erreichen der gespeicherten Sitzlängsposition ein Streuermoment erfährt und dann wenigstens ein mit der zweiten Sitzschiene (15) zusammenwirkendes Sperrelement (73) ansteuert, das in einem Lastbereich der Memoryvorrichtung (11; 11a) vorgesehen ist und von der eigentlichen Verriegelung des Längseinstellers (3) zu unterscheiden ist, welche durch die gesonderte Verriegelungsvorrichtung (16) erfolgt.

2. Längseinsteller nach Anspruch 1, **dadurch gekennzeichnet, dass** als Sperrelement ein Positionierhebel (73) vorgesehen ist, welcher auf einer gehäusefesten Schwenkachse (71) der Memoryvorrichtung (11) gelagert ist und bei Beaufschlagung durch den Steuersignalgeber (53) aus der Memoryvorrichtung (11) heraus schwenkt und über eine Sperrnase (81) mit der zweiten Sitzschiene (15) zusammenwirkt.

3. Längseinsteller nach Anspruch 2, **dadurch gekennzeichnet, dass** wenigstens zwei Positionierhebel (73) vorgesehen sind, deren Sperrnasen (81) unterschiedliche Abstände zu der Schwenkachse (71) aufweisen.

4. Längseinsteller nach Anspruch 3, **dadurch gekennzeichnet, dass** der Steuersignalgeber (53) die vorgesehenen Positionierhebel (73) in der einen Schwenkrichtung über einzelne Zungen (61) und in der anderen Schwenkrichtung über einen gemeinsamen Bügel (65) beaufschlagt.

5. Längseinsteller nach einem der Ansprüche 1 bis 4, **dadurch gekennzeichnet, dass** der Steuersignalgeber (53) auf einer Spindel (25) des Wegmessers (21) läuft.

6. Längseinsteller nach einem der Ansprüche 1 bis 5, **dadurch gekennzeichnet, dass** der Steuersignalgeber (53) einerseits und ein Block (27) des Wegmessers (21) andererseits jeweils eine Anschlagfläche (55 bzw. 29) aufweisen, welche beim Anfahren der gespeicherten Sitzlängsposition in Anlage aneinander gelangen und das Steuermoment übertragen.

7. Längseinsteller nach einem der Ansprüche 1 bis 6, **dadurch gekennzeichnet, dass** ein drehbar gelagertes Rad (41) vorgesehen ist, welches mit der zweiten Sitzschiene (15) schaltbar zusammenwirkt und mit dem Wegmesser (21) in Wirkverbindung steht.

8. Längseinsteller nach Anspruch 7, **dadurch gekennzeichnet, dass** das Rad (41) auf einem Schalthebel (35) gelagert ist, welcher für ein Zurücksetzen der Memoryvorrichtung (11) durch Speicherung einer neu eingestellten Sitzlängsposition das Rad (41) von der zweiten Sitzschiene (15) trennt.

9. Längseinsteller nach Anspruch 7 oder 8, **dadurch gekennzeichnet, dass** eine Andrückfeder (51) schaltbar das Rad (41) gegen die zweite Sitzschiene (15) drückt.

10. Längseinsteller nach einem der Ansprüche 1 bis 9, **dadurch gekennzeichnet, dass** der Wegmesser (21) eine Reset-Feder (33) aufweist, welche für ein Zurücksetzen der Memoryvorrichtung (11) den Steuersignalgeber (53) in die Ausgangsposition bewegt.

11. Längseinsteller nach einem der Ansprüche 1 bis 10, **dadurch gekennzeichnet, dass** die Memoryvorrichtung (11) innerhalb eines durch die erste Sitzschiene (13) definierten Bauraums angeordnet ist.

12. Längseinsteller nach einem der Ansprüche 1 bis 11, **dadurch gekennzeichnet, dass** eine Ansteuervorrichtung (101) vorgesehen ist, welche beim direkten Betätigen des Längseinstellers (3) die Memoryvorrichtung (11) zurücksetzt, wobei beim Freischwenken der Lehne (5) die Memoryvorrichtung (11) ohne Zurücksetzen entkoppelt ist.

13. Längseinsteller nach Anspruch 11 und 12, **dadurch gekennzeichnet, dass** die Ansteuervorrichtung (101) oberhalb der Memoryvorrichtung (11) auf der ersten Sitzschiene (13) angebracht ist.

14. Längseinsteller nach Anspruch 12 oder 13, **dadurch gekennzeichnet, dass** die Ansteuervorrichtung (101) Bauteile (133, 141) zum Entriegeln der Verriegelungsvorrichtung (16) lagert.

15. Längseinsteller nach Anspruch 14, **dadurch gekennzeichnet, dass** beim Freischwenken der Lehne (5) die Ansteuervorrichtung (101) die Verriegelungsvorrichtung (16) entriegelt.

16. Fahrzeugsitz (1), insbesondere für ein zweitüriges Kraftfahrzeug, mit einer freischwenkbaren Lehne (5), **gekennzeichnet durch** einen Längseinsteller (3) nach einem der Ansprüche 1 bis 15.

## Claims

1. Longitudinal adjuster for a vehicle seat (1) having a freely pivotable backrest (5), having a first seat rail (13), a second seat rail (15), in relation to which the first seat rail (13) can be slid in the longitudinal direction, a locking device (16), for locking the longitudinal adjuster (3), which is configured to absorb crashing forces and which unlocks when the longitudinal adjuster (3) is directly triggered and locks the longitudinal adjuster (3) again in the newly set longitudinal seat position, and a memory device (11; 11a) which is assigned to the first seat rail (13), interacts with the second seat rail (15) and stores a set longitudinal seat position which can be left by means of a longitudinal displacement of the vehicle seat (1) when the backrest (5) pivots freely, and resumed when the backrest (5) pivots back, wherein a displacement measuring device (21) which can be operatively connected to the second seat rail (15) and a control signal generator (53) which can move in relation to the displacement measuring device (21) are provided, the relative movement of said control signal generator (53) with respect to the displacement measuring device (21) from a home position representing the longitudinal displacement which has occurred, **characterized in that** the control signal generator (53) experiences, at the latest when the stored longitudinal seat position is reached, a control torque and then actuates at least one locking element (73), interacting with the second seat rail (15), which is provided in a load area of the memory device (11; 11a) and which is to be distinguished from the actual locking of the longitudinal adjuster (3) being carried out by the separate locking device (16).

2. Longitudinal adjuster according to Claim 1,
**characterized in that** a positioning lever (73) which is mounted on a pivot axis (71), fixed to the housing, of the memory device (11; 11a) is provided as a locking element, and when said positioning lever (73) is acted on by the control signal generator (53) it pivots out of the memory device (11) and interacts with the second seat rail (15) by means of a locking nose (81).

3. Longitudinal adjuster according to Claim 2,
**characterized in that** at least two positioning levers (73) are provided, the locking noses (81) of which are at different distances from the pivot axis (71).

4. Longitudinal adjuster according to Claim 3,
**characterized in that** the control signal generator (53) acts on the provided positioning levers (73) in one pivoting direction by means of individual tongues (61), and in the other pivoting direction by means of a common bracket (65).

5. Longitudinal adjuster according to one of Claims 1 to 4, **characterized in that** the control signal generator (53) runs on a spindle (25) of the displacement measuring device (21).

6. Longitudinal adjuster according to one of Claims 1 to 5, **characterized in that** the control signal generator (53) on the one hand, and a block (27) of the displacement measuring device (21) on the other hand, each have a stop face (55 and 29), which stop faces bear against one another when the stored longitudinal seat position is reached, and transmit the control torque.

7. Longitudinal adjuster according to one of Claims 1 to 6, **characterized in that** a rotatably mounted running wheel (41) is provided which interacts with the second seat rail (15) in a switchable fashion and is operatively connected to the displacement measuring device (21).

8. Longitudinal adjuster according to Claim 7,
**characterized in that** the running wheel (41) is mounted on a lever (35) or a lever arrangement (34a, 35a) which disconnects the running wheel (41) from the second seat rail (15) in order to reset the memory device (11; 11a) by storing a newly set longitudinal seat position.

9. Longitudinal adjuster according to Claim 7 or 8,
**characterized in that** a pressure spring (51; 51a) presses the running wheel (41) against the second seat rail (15) in a switchable fashion.

10. Longitudinal adjuster according to one of Claims 1 to 9, **characterized in that** the displacement measuring device (21) has a reset spring (33) which moves the control signal generator (53) into the home position in order to reset the memory device (11; 11a).

11. Longitudinal adjuster according to one of Claims 1 to 10, **characterized in that** the memory device (11; 11a) is arranged within an installation space which is defined by the first seat rail (13).

12. Longitudinal adjuster according to one of Claims 1 to 11, **characterized in that** an actuation device (101) is provided which resets the memory device (11; 11a) when the longitudinal adjuster (3) is actuated directly, the memory device (11; 11a) being decoupled without resetting when the backrest (5) pivots freely.

13. Longitudinal adjuster according to Claims 11 and 12, **characterized in that** the actuation device (101) is mounted on the first seat rail (13) above the memory device (11; 11a).

14. Longitudinal adjuster according to Claim 12 or 13,
**characterized in that** the actuation device (101) supports components (133, 141) for unlocking the locking device (16).

15. Longitudinal adjuster according to Claim 14,
**characterized in that** when the backrest (5) pivots freely, the actuation device (101) unlocks the locking device (16).

16. Vehicle seat (1), in particular for a two-door motor vehicle, having a freely pivotable backrest (5),
**characterized by** a longitudinal adjuster (3) according to one of Claims 1 to 15.

## Revendications

1. Organe de réglage en longueur pour un siège d'automobile (1) avec dossier (5) pouvant pivoter librement, avec un premier rail de siège (13), un deuxième rail de siège (15) par rapport auquel le premier rail de siège (13) peut coulisser dans le sens longitudinal, un dispositif de verrouillage (16) pour verrouiller l'organe de réglage en longueur (3), lequel dispositif de verrouillage est conçu pour absorber les forces de collision et lequel procède au déverrouillage lors du déclenchement direct de l'organe de réglage en longueur (3) et procède de nouveau au verrouillage de l'organe de réglage en longueur (3) dans la position longitudinale de siège qui vient d'être réglée, et un dispositif de mémoire (11 ; 11a) affecté au premier rail de siège (13) et coopérant avec le deuxième rail de siège (15), lequel dispositif de mémoire enregistre une position longitudinale de siège réglée que l'on quitte par un coulissement longitudinal du siège d'automobile (1) effectué lors du pivotement libre du dossier (5) et qui est rétablie lors du pivotement en sens inverse du dossier (5), un capteur de déplacement (21) pouvant être mis en liaison active avec le deuxième rail de siège (15), et un transmetteur de signal de commande (53) mobile par rapport au capteur de déplacement (21) étant prévus, transmetteur dont le mouvement relatif par rapport au capteur de déplacement (21) à partir d'une position de départ reflète le coulissement longitudinal effectué, **caractérisé par le fait que** le transmetteur de signal de commande (53) expérimente un moment de commande au plus tard lorsque la position longitudinale de siège enregistrée est atteinte et puis active au moins un élément de blocage (73) coopérant avec le deuxième rail de siège (15), élément de blocage qui est prévu dans une zone de charge du dispositif de mémoire (11 ; 11a) et qui est à distinguer du verrouillage proprement dit de l'organe de réglage (3), lequel a lieu par le dispositif de verrouillage (16) séparé.

2. Organe de réglage en longueur selon la revendication 1, **caractérisé par le fait qu'**en tant qu'élément de blocage, il est prévu un levier de positionnement (73) qui repose sur un axe pivotant (71), fixe dans un carter, du dispositif de mémoire (11 ; 11a) et qui, lorsqu'il est excité par le transmetteur de signal de commande (53), pivote hors du dispositif de mémoire (11) et coopère avec le deuxième rail de siège (15) par l'intermédiaire d'un bec de blocage (81).

3. Organe de réglage en longueur selon la revendication 2, **caractérisé par le fait qu'**il est prévu au moins deux leviers de positionnement (73) dont les becs de blocage (81) présentent des intervalles différents par rapport à l'axe pivotant (71).

4. Organe de réglage en longueur selon la revendication 3, **caractérisé par le fait que** le transmetteur de signal de commande (53) excite les leviers de positionnement (73) prévus dans une direction de pivotement par l'intermédiaire des languettes (61) individuelles et dans l'autre direction de pivotement par l'intermédiaire d'un étrier (65) commun.

5. Organe de réglage en longueur selon l'une des revendications 1 à 4, **caractérisé par le fait que** le transmetteur de signal de commande (53) se déplace sur une broche (25) du capteur de déplacement (21).

6. Organe de réglage en longueur selon l'une des revendications 1 à 5, **caractérisé par le fait que** le transmetteur de signal de commande (53) d'une part et un bloc (27) du capteur de déplacement (21) d'autre part présentent chacun une surface de butée (55 ou 29) qui entrent en contact l'une avec l'autre quand on parvient à la position longitudinale de siège enregistrée et transmettent le moment de commande.

7. Organe de réglage en longueur selon l'une des revendications 1 à 6, **caractérisé par le fait qu'**il est prévu une roue mobile (41), disposée de manière rotative, qui coopère de façon embrayable avec le deuxième rail de siège (15) et est en liaison active avec le capteur de déplacement (21).

8. Organe de réglage en longueur selon la revendication 7, **caractérisé par le fait que** la roue mobile (41) repose sur un levier (35) ou un dispositif de levier (34a, 35a) qui sépare du deuxième rail de siège (15) la roue mobile (41) en vue d'une réinitialisation du dispositif de mémoire (11 ; 11a) en enregistrant une position longitudinale de siège qui vient d'être réglée.

9. Organe de réglage en longueur selon l'une des revendications 7 ou 8, **caractérisé par le fait qu'**un ressort de pression (51 ; 51a) comprime de façon embrayable la roue mobile (41) contre le deuxième rail de siège (15).

10. Organe de réglage en longueur selon l'une des revendications 1 à 9, **caractérisé par le fait que** le capteur de déplacement (21) présente un ressort de réenclenchement (33) qui déplace dans la position initiale le transmetteur de signal de commande (53) pour remettre le dispositif de mémoire (11 ; 11a) dans l'état initial.

11. Organe de réglage en longueur selon l'une des revendications 1 à 10, **caractérisé par le fait que** le dispositif de mémoire (11 ; 11a) est disposé à l'intérieur d'un espace de montage défini par le premier rail de siège (13).

12. Organe de réglage en longueur selon l'une des revendications 1 à 11, **caractérisé par le fait qu'**il est prévu un dispositif de commande (101) qui met à zéro le dispositif de mémoire (11 ; 11a) lors de l'actionnement direct de l'organe de réglage en longueur (3), le dispositif de mémoire (11 ; 11a) étant découplé sans mise à zéro lors du pivotement libre du dossier (5).

13. Organe de réglage en longueur selon les revendications 11 et 12, **caractérisé par le fait que** le dispositif de commande (101) est placé au-dessus du dispositif de mémoire (11 ; 11a) sur le premier rail de siège (13).

14. Organe de réglage en longueur selon l'une des revendications 12 ou 13, **caractérisé par le fait que** le dispositif de commande (101) supporte des composants (133, 141) pour le déverrouillage du dispositif de verrouillage (16).

15. Organe de réglage en longueur selon la revendication 14, **caractérisé par le fait que**, lors du pivotement libre du dossier (5), le dispositif de commande (101) déverrouille le dispositif de verrouillage (16).

16. Siège d'automobile (1), en particulier pour un véhicule automobile à deux portes, avec un dossier (5) pouvant pivoter librement, **caractérisé par** un organe de réglage en longueur (3) selon l'une des revendications 1 à 15 .
